# EUROPÄISCHE PATENTSCHRIFT

(11) **EP 3 247 480 B1**
(45) Veröffentlichungstag und Bekanntmachung des Hinweises auf die Patenterteilung: **07.11.2018**
(21) Anmeldenummer: 16700998.4
(22) Anmeldetag: 19.01.2016
(51) Int. Cl.: B01D 3/10, F04D 13/02, F04D 15/02

(54) **KOLONNE ZUR REINDESTILLATION VON CARBONSÄUREANHYDRIDEN**
COLUMN FOR PURIFICATION BY DISTILLATION OF CARBOXYLIC ACID ANHYDRIDES
COLONNE DE DISTILLATION PURE D'ANHYDRIDES D'ACIDE CARBOXYLIQUE

(30) Priorität: 21.01.2015 EP 15151884
(43) Veröffentlichungstag der Anmeldung: 29.11.2017
(73) Patentinhaber: BASF SE, 67056 Ludwigshafen (DE)
(72) Erfinder: RAHM, Rainer, 67281 Kirchheim (DE); BLECHSCHMITT, Michael, 67105 Schifferstadt (DE); HUF, Christian, 67752 Oberweiler-Tiefenbach (DE); BUCKEL, Michael, 76831 Billigheim-Ingenheim (DE); SCHULER, Thomas, 67246 Dirmstein (DE); BUCKEL, Gerhard, 67069 Ludwigshafen (DE)
(74) Vertreter: BASF IP Association
(86) Internationale Anmeldenummer: PCT/EP2016/050983
(87) Internationale Veröffentlichungsnummer: WO 2016/116428

(56) Entgegenhaltungen:
- CN-A- 101 391 975
- DE-A1- 3 639 719
- DE-A1- 4 009 199
- US-A- 5 501 582
- US-A- 5 525 039

## Beschreibung

Die Erfindung geht aus von einer Kolonne zur Reindestillation von Carbonsäureanhydriden, umfassend einen Sumpfumlauf, in dem ein Verdampfer aufgenommen ist, und eine Pumpe, um am Sumpf entnommenes Produkt durch den Verdampfer und zurück in die Kolonne zu leiten.

Carbonsäureanhydride, insbesondere Phthalsäureanhydrid, sind bedeutsame Grundchemikalien in der chemischen Industrie. Phthalsäureanhydrid dient zu einem beträchtlichen Teil als Ausgangsstoff für die Alkylphthalate, die in großen Mengen als Weichmacher für Kunststoffe wie PVC eingesetzt werden. Phthalsäureanhydrid wird aus Naphthalin und/oder o-Xylol durch katalytische Oxidation in der Gasphase hergestellt. Der gewonnene Rohproduktstrom enthält dabei im Allgemeinen mehr als 99,5 Gew.-% Phthalsäureanhydrid. Dies wird im Allgemeinen in flüssiger Form oder als Feststoff an Abscheidern isoliert und danach destillativ gereinigt. Zur destillativen Reinigung wird der Phthalsäureanhydrid enthaltende Rohproduktstrom flüssig oder nach Verdampfen einer Destillationskolonne zugeführt. Ein entsprechendes Verfahren zur Herstellung von Phthalsäureanhydrid ist zum Beispiel aus WO-A 01/14308 bekannt.

Zur Aufreinigung des Phthalsäureanhydrid enthaltenden Rohproduktstromes wird eine Destillationskolonne bei vermindertem Druck betrieben. Am Kopf der Destillationskolonne werden Leichtsieder entnommen und über einen Seitenabzug das aufgereinigte Phthalsäureanhydrid.

Am Kolonnensumpf wird ein Stoffstrom entnommen, der zumindest teilweise in einem Wärmeübertrager erhitzt und in die Kolonne zurückgeführt wird. Hierzu wird der in die Kolonne zurückgeführte Sumpfstrom mithilfe einer geeigneten Pumpe umgewälzt.

Bei den bekannten Verfahren zur Aufreinigung von Phthalsäureanhydrid ist der Produktstrom im Sumpfbereich mit eisenhaltigen Bestandteilen, insbesondere Rost aus vorgelagerten Abscheidersystemen, belastet und stellt daher hohe Anforderungen an die verwendeten Pumpensysteme, um den Sumpfstrom stabil umwälzen zu können und Pumpenausfälle minimieren zu können.

Üblicherweise werden hierzu Kreiselpumpen eingesetzt. Diese haben im Allgemeinen eine einfache oder doppelt wirkende Gleitringdichtung, jedoch sind Produktleckagen nach außen, die im laufenden Betrieb nur schwer abzustellen sind und ungeplante Abstellungen zur Folge haben können, nicht auszuschließen. Die Auswahl eines geeigneten Gleitringtyps ist mit hohen Anforderungen an Material und Ausführung verbunden. Hier haben sich doppelt wirkende Gleitringdichtungen aus Sondermaterialien, beispielsweise aus Hastelloy® als geeignet erwiesen.

Im Unterschied zu Kreiselpumpen mit Gleitringdichtungen zeigen hermetisch dichte Kreiselpumpen in Magnetkupplungsausführung nicht die ungewünschten Leckagen nach außen, jedoch sind diese anfällig hinsichtlich der eisenhaltigen Partikel im Sumpfprodukt. Die magnetisierbaren Eisenbestandteile bringen es mit sich, dass der Spalttopf der Kreiselpumpen mit Magnetkupplung durch Abrasion derart geschädigt wird, dass die Pumpe außer Betrieb genommen und ausgetauscht werden muss.

Zum Beispiel offenbart CN101391975A eine Kolonne für N-vynilpyrrolidone wobei eine Magnetkupplungspumpe eingesetzt wird. Aufgabe der vorliegenden Erfindung ist es daher, eine Kolonne zur Reindestillation von Carbonsäureanhydriden bereitzustellen, bei der Leckagen und Schädigungen an der Pumpe zum Umwälzen des Sumpfstromes vermieden werden können.

Gelöst wird die Aufgabe durch Anspruch 1.

Durch den Einsatz einer Magnetkupplungspumpe wird zunächst ein hermetisch dichter Pumpentyp eingesetzt, so dass Leckagen im Bereich der Pumpe ausgeschlossen werden können. Die Gestaltung der Pumpe derart, dass am äußeren Umfang des Rotors eine sich in axialer Richtung erstreckende Magnethalterung ausgebildet ist, führt zu einer deutlich verkürzten Bauweise gegenüber üblichen Magnetkupplungspumpen, bei denen die Magnete in der Rotorwelle angebracht sind. Überaschenderweise hat sich gezeigt, dass bei einer Gestaltung der Pumpe mit am äußeren Umfang des Rotors angebrachten Magneten Schädigungen aufgrund von im Sumpfstrom enthaltenen Eisenpartikeln deutlich verringert werden können. Der Einsatz einer entsprechenden Pumpe führt somit zu einer deutlich verbesserten Arbeitssicherheit und ungeplante Abstellungen des Verfahrens, die sich aufgrund von Schädigungen an der Pumpe ergeben, sind nahezu ausgeschlossen.
Um die Pumpe im Wesentlichen verschleißfrei betreiben zu können, ist zwischen der sich in axialer Richtung am äußeren Umfang des Rotors erstreckenden Magnethalterung und dem Gehäuse sowie zwischen der Magnethalterung und dem Spalttopf ein Spalt ausgebildet, der von der mit der Pumpe zu fördernden Flüssigkeit durchströmt wird. Der Antrieb des Rotors erfolgt über die in der Magnethalterung aufgenommenen Magnete, so dass ein berührungsfreier Antrieb des Rotors erfolgt und auch die Lagerung des Rotors innerhalb des Gehäuses aufgenommen werden kann und nicht durch das Gehäuse nach außen geführt werden muss. Hierdurch werden potentielle Leckagestellen vermieden. Durch den berührungsfreien Antrieb wird ein Verschleiß aufgrund von Reibung ausgeschlossen. Um einen Verschleiß der rotierenden Pumpenteile durch Eisenpartikel in der Flüssigkeit zu verhindern ist es notwendig, dass sämtliche Spalte im Pumpenraum von der Flüssigkeit durchströmt werden und sich keine Toträume bilden, in denen sich Flüssigkeit ansammelt und in denen somit auch Partikel aufkonzentriert werden können, die dann im weiteren Betrieb zu Abrasion und damit zu Schädigungen an der Pumpe führen können.

Eine ausreichend hohe Geschwindigkeit der Flüssigkeit, die durch die Spalte im Pumpenraum strömt, wird zum Beispiel dadurch erzielt, dass die Querschnittsflächen des Spalts zwischen der Magnethalterung und dem Gehäuse sowie des Spalts zwischen der Magnethalterung und dem Spalttopf kleiner ist als die Querschnittsfläche eines im Rotor radial verlaufenden Strömungskanals. Durch den radial verlaufenden Strömungskanal wird die Flüssigkeit aufgrund der Fliehkraft bei Rotation des Rotors in einen den Rotor umschließenden ringförmigen Sammelraum und von dort zum druckseitigen Ablauf transportiert. Die geringere Querschnittsfläche der Spalte hat die Wirkung, dass nur ein geringer Anteil der Flüssigkeit in die Spalte gelangt. Zudem kann aufgrund der geringen Querschnittsfläche der Spalte in den Spalten eine hohe Geschwindigkeit erzielt werden, so dass sich keine Partikel im Bereich der Spalte ansammeln und zu einem Verschleiß führen können.

Um eine Durchströmung der Spalte zwischen der Magnethalterung und dem Spalttopf sowie der Magnethalterung und dem Gehäuse zu erhalten, ist die Pumpe vorzugsweise so gestaltet, dass die den Spalt zwischen Magnethalterung und Gehäuse und zwischen Magnethalterung und Spalttopf durchströmende Flüssigkeit durch eine zentrale Bohrung in der Achse des Rotors zurück zur Saugseite der Pumpe gefördert wird. Da aufgrund der radial verlaufenden Strömungskanäle im Rotor auf der Saugseite ein Unterdruck entsteht, wird auch die Flüssigkeit durch die Bohrung im Rotor in Richtung der Saugseite gesaugt. Hierdurch wird eine Durchströmung der Spalte zwischen Magnethalterung und Gehäuse und zwischen Magnethalterung und Spalttopf erreicht, so dass sich keine Partikel ansammeln, die zu einer Beschädigung der rotierenden Bauteile der Pumpe durch Abrasion führen können. Aufgrund der kontinuierlich nachströmenden Flüssigkeit durch die Spalte werden ein regelmäßiger Flüssigkeitsaustausch und eine Durchspülung erzielt.

Um eine Beschädigung der Bauteile der Pumpe, insbesondere des Lagers des Rotors zu vermeiden, ist es weiterhin bevorzugt, hierfür besonders widerstandsfähige, das heißt harte, Materialien zu verwenden. Besonders bevorzugt ist es, das Lager des Rotors aus einem Hartmetall, beispielsweise Wolframcarbid, zu fertigen. Die Verwendung des Hartmetalls, beispielsweise des Wolframcarbids, führt zu einer Verschleißreduktion im Bereich des Lagers des Rotors, so dass auch hier eine größere Langlebigkeit der Pumpe erzielt wird und Pumpenausfälle außerhalb der regulären Wartungsintervalle vermieden werden können.

Um einen Verschleiß aufgrund der mit der strömenden Flüssigkeit mitgerissenen Partikel am Spalttopf zu vermeiden, wird dieser vorzugsweise aus einer Nickelbasislegierung gefertigt. Die Verwendung einer Nickelbasislegierung hat den zusätzlichen Vorteil, dass diese zudem eine gute chemische Beständigkeit aufweist, so dass auch Schädigungen durch gegebenenfalls noch im Stoffstrom enthaltene korrosiv wirkende Komponenten aus der Herstellung des Carbonsäureanhydrids, beispielsweise Carbonsäuren, vermieden werden. Eine geeignete Nickelbasislegierung ist zum Beispiel die unter dem Markennamen Hastelloy® erhältliche Nickelbasislegierung. Hierbei handelt es sich im Allgemeinen um eine Legierung aus Nickel und Molybdän, die zusätzlich auch Chrom enthalten kann.

Weiterhin ist es bevorzugt, wenn der Spalttopf eine Wandstärke im Bereich von 3 bis 5 mm aufweist. Durch die entsprechende Wandstärke wird sichergestellt, dass gegebenenfalls auftretende kleine Erosionen am Spalttopf noch nicht zu einer so starken Schädigung führen, dass dies zu einem Ausfall der Pumpe führt. Der Aufbau der Pumpe mit einem Spalttopf hat den zusätzlichen Vorteil, dass bei einer Revision der Spalttopf auf einfache Weise als Verschleißteil ausgetauscht werden kann.

Um zu vermeiden, dass im Sumpfstrom enthaltene Komponenten in der Pumpe erstarren und so zu einer Fehlfunktion führen können, ist es weiterhin bevorzugt, wenn das Pumpengehäuse beheizbar ist. Besonders bevorzugt ist es hierbei, wenn das Pumpengehäuse zur Beheizung einen Hohlraum aufweist, der von einem Temperiermedium durchströmt wird. Durch die kompakte Bauweise der Magnetkupplungspumpe, die sich durch die am äußeren Umfang des Rotors in axiale Richtung erstreckende Magnethalterung ergibt, durch die der Rotor angetrieben wird, ist es möglich, das gesamte Gehäuse als Heizmantel zu gestalten. Dies erlaubt eine einfache Konstruktion des Gehäuses. Es ist nicht notwendig, mehrere Gehäuseteile jeweils unabhängig voneinander zu beheizen. Zudem ist ein einzelner Strom des Temperiermediums ausreichend, um die Pumpe zu beheizen.

Das eingesetzte Temperiermedium kann dabei jedes beliebige, dem Fachmann bekannte Temperiermedium sein. Geeignete Temperiermedien sind zum Beispiel Thermalöle oder Wasserdampf.

Die Gestaltung des Pumpengehäuses mit einem Hohlraum, der von einem Temperiermedium durchströmt wird und damit einer Gestaltung mit nur einem einzigen Heizmantel hat den weiteren Vorteil, dass eine optimale Wärmeverteilung erzielt wird. Es gibt keine Kältebrücken bzw. Temperaturunterschiede im Bereich des Gehäuses. Bei einer Gestaltung des Gehäuses mit mehreren von einem Temperiermedium durchströmten voneinander unabhängigen Bereichen können sich zwischen den einzelnen Bereichen Kältebrücken ausbilden, die wiederum zu einem Erstarren von Komponenten in der Flüssigkeit führen können.

In einer bevorzugten Ausführungsform ist am Spalttopf eine Temperaturmesssonde positioniert. Mit der Temperaturmesssonde am Spalttopf wird die Temperatur der Oberfläche des Spalttopfs zwischen Rotor und Magnetkupplung gemessen. Hierdurch lässt sich ein unzulässiger Temperaturanstieg in der Pumpe, der zum Beispiel auf eine Lagerschädigung oder Trockenlauf der Magnetkupplungspumpe hinweisen kann, frühzeitig feststellen, so dass ein Ausfall und Folgeschäden durch rechtzeitiges Abschalten der Magnetkupplungspumpe vermieden werden können.

Die Kolonne eignet sich zur Reindestillation beliebiger Carbonsäureanhydride. Besonders bevorzugt ist es, die Kolonne zur Reindestillation von Phthalsäureanhydrid einzusetzen.

Ausführungsbeispiele der Erfindung sind in den Figuren dargestellt und werden in der nachfolgenden Beschreibung näher erläutert.

Es zeigen:
- Figur 1: eine Kolonne zur Reindestillation,
- Figur 2: eine Schnittdarstellung einer erfindungsgemäß eingesetzten Pumpe.

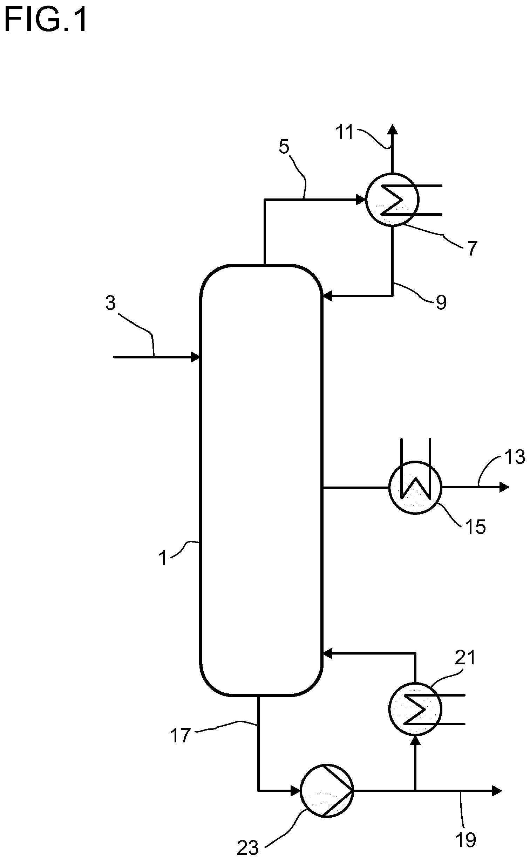

Figur 1 zeigt eine Kolonne zur Reindestillation in schematischer Darstellung.

Eine Kolonne 1 zur Reindestillation von Carbonsäureanhydriden, insbesondere zur Reindestillation von Phthalsäureanhydrid, weist üblicherweise Einbauten auf. Als Einbauten können zum Beispiel Böden in der Kolonne vorgesehen sein. Alternativ ist es auch möglich, zum Beispiel strukturierte oder unstrukturierte Packungen, beispielsweise in Form von Füllkörpern, einzusetzen. Bevorzugt ist jedoch der Einsatz einer Bodenkolonne. Als Böden können zum Beispiel Glockenböden, Tunnelböden, Ventilböden, Siebböden, Dualflowböden oder Gitterböden eingesetzt werden. Wenn Packungen als Einbauten eingesetzt werden, so eignen sich zum Beispiel Pall-Ringe®, Berl®-Sattelkörper, Netzdrahtringe, Raschig-Ringe®, Intalox®-Sättel, Interpak®-Füllkörper und Intos®-Füllkörper. Geordnete Packungen, die verwendet werden können, sind beispielsweise Sulzer-Mellapak®, Sulzer-Optiflow®, Kühni-Rombopak® und Montz-Pak® sowie Gewebepackungen.

Über einen Zulauf 3 wird der Kolonne 1 das aufzureinigende Gemisch zugeführt. Das aufzureinigende Gemisch ist üblicherweise ein Carbonsäureanhydrid-Rohproduktstrom, der im Allgemeinen neben dem zu gewinnenden Carbonsäureanhydrid weitere Carbonsäureanhydride sowie Carbonsäuren als Verunreinigungen enthalten kann. Der Anteil des zu gewinnenden Carbonsäureanhydrids im Rohproduktstrom, der über den Zulauf 3 der Kolonne 1 zugeführt wird, liegt üblicherweise bereits bei mehr als 95 Gew.-%, insbesondere bei mehr als 98 Gew.-%. Die durch die Reindestillation in der Kolonne 1 abzutrennenden Verunreinigungen machen demnach einen Anteil von weniger als 5 Gew.-%, insbesondere von weniger als 2 Gew.-% aus.

Um die Kolonne kontinuierlich betreiben zu können, ist es besonders vorteilhaft, wenn unterhalb des Zulaufes 3 Einbauten eingesetzt werden, die feststofftauglich sind, insbesondere Dualflowböden.

Über Kopf der Kolonne 1 wird ein Kopfstrom 5 abgezogen. Dieser wird einem Kopfkondensator 7 zugeführt, indem ein Teil des Kopfstromes 5 auskondensiert und als Kondensat über einen Rücklauf 9 am Kopf der Kolonne zurückgeführt wird. Die nicht kondensierten Teile des Kopfstromes 5 werden über einen Abzug 11 aus dem Verfahren abgeführt.

Das als Reinprodukt gewonnene Carbonsäureanhydrid wird über einen Seitenabzug 13 aus der Kolonne 1 entnommen. In der hier dargestellten Ausführungsform, bei der der Seitenabzug 13 unterhalb des Zulaufs 3 liegt, wird der Produktstrom gasförmig entnommen. In einem Wärmetauscher 15 wird der gasförmige Produktstrom kondensiert.

Bei der Reindestillation von Phthalsäureanhydrid wird die Kolonne 1 im Allgemeinen bei einem absoluten Druck am Kolonnenkopf von 0,05 bis 0,5, bevorzugt 0,07 bis 0,3, besonders bevorzugt 0,09 bis 0,25 und ganz besonders bevorzugt bei einem Druck um 0,1 bar betrieben. Die Temperaturen in der Kolonne liegen im Allgemeinen bei etwa 160 bis 230°C am Kolonnenkopf und bei 180 bis 270°C im Kolonnensumpf. Die Temperatur am Seitenabzug liegt im Allgemeinen bei 170 bis 260°C, vorzugsweise bei 200 bis 240°C.

Die Destillation kann diskontinuierlich oder, vorzugsweise, kontinuierlich durchgeführt werden. Der Rohproduktstrom wird der Kolonne vorzugsweise flüssig oder gasförmig, insbesondere flüssig zugeführt. Die Entnahme in flüssiger Form erfolgt normalerweise oberhalb des Zulaufs 3 in die Kolonne 1, die Entnahme im gasförmigen Zustand, die bevorzugt ist, erfolgt normalerweise wie hier dargestellt unterhalb des Zulaufs 3.

Am Sumpf der Kolonne wird ein Sumpfstrom 17 entnommen, von dem ein Teilstrom 19 als schwersiedende Fraktion aus dem Prozess entnommen wird. Der Rest des Sumpfstromes 17 wird über einen Verdampfer 21 geführt und zurück in die Kolonne geleitet. Als Verdampfer 21 eignet sich jeder dem Fachmann bekannte Verdampfer. Bevorzugt ist es, Zwangsumlaufentspannungsverdampfer oder Fallfilmverdampfer einzusetzen.

Um den Sumpfstrom 17 durch den Verdampfer 21 und zurück in den Sumpf der Kolonne 1 führen zu können, wird eine Pumpe 23 eingesetzt.

Erfindungsgemäß ist die Pumpe 23 eine Magnetkupplungspumpe, bei der am äußeren Umfang des Rotors eine sich in axialer Richtung erstreckende Magnethalterung ausgebildet ist und der Rotor auf der der Saugseite gegenüberliegenden Seite mit einem Spalttopf verschlossen ist.

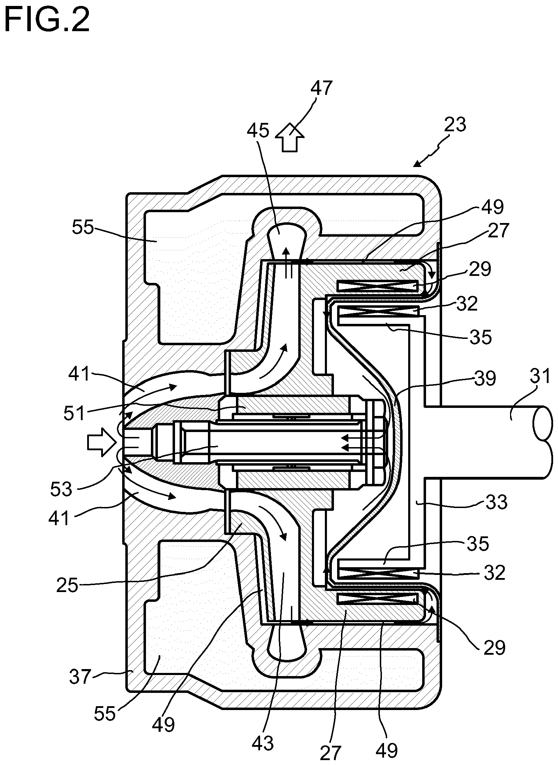

Eine entsprechende Pumpe ist in Figur 2 dargestellt.

Eine erfindungsgemäße Pumpe 23 ist eine Magnetkupplungspumpe mit einem Rotor 25, der am äußeren Umfang eine sich in axialer Richtung erstreckende Magnethalterung 27 aufweist. In der Magnethalterung 27 sind Magnete 29 aufgenommen. Den Magneten 29 liegen Magnete 32 gegenüber, die mit einer Antriebsachse 31 verbunden sind. Hierzu ist an der Antriebsachse 31 eine tellerförmige Erweiterung 33 ausgebildet, die in einer sich ebenfalls radial erstreckenden Magnethalterung 35 endet. Die Magnete 29, 32 sind so angebracht, dass sich diese mit entgegengesetzten Polen gegenüberliegen. Bei einer Drehung der Antriebsachse 31 führt dies dazu, dass aufgrund der Anziehung der Magnete 29, 32 der Rotor 25 ebenfalls in Bewegung versetzt wird.

Der Rotor 25 ist von einem Gehäuse 37 umschlossen. Hierbei weist das Gehäuse 37 auf der der Antriebsachse 31 zugewandten Seite einen Spalttopf 39 auf, mit dem der Rotor und das Gehäuse gegenüber dem Antrieb verschlossen wird. Der Spalttopf 39 ist dabei durch einen Spalt zwischen den Magneten 29 und 32 geführt. Wie vorstehend bereits beschrieben, ist der Spalttopf 39 vorzugsweise aus einer Nickelbasislegierung, insbesondere einer Nickelmolybdän-Legierung, beispielsweise Hastelloy® gefertigt. Die Wanddicke des Spalttopfs 39 liegt dabei vorzugsweise im Bereich von 3 bis 5 mm.

Auf der der Antriebsachse 31 gegenüberliegenden Seite befindet sich die Saugseite der Pumpe 23, durch die die Flüssigkeit angesaugt wird. Hierzu sind im Gehäuse 37 Strömungskanäle 41 ausgebildet. Die Strömungskanäle 41 münden in Strömungskanäle 43 im Rotor 25. Die Strömungskanäle 43 im Rotor 25 verlaufen dabei im Wesentlichen in radialer Richtung. Die Strömungskanäle 43 enden in einem im Gehäuse 37 ausgebildeten Ringraum 45, der mit einem druckseitigen Ablauf 47, durch den die Flüssigkeit gefördert wird, verbunden ist. Durch Rotation des Rotors 25 bilden sich Fliehkräfte im Strömungskanal 43 aus, durch die die Flüssigkeit in den Ringraum 45 transportiert wird. Aufgrund des Drucks der Flüssigkeit im Ringraum 45 wird diese durch den druckseitigen Ablauf 47 aus der Pumpe heraus gefördert. Gleichzeitig entsteht durch die Strömung der Flüssigkeit ein Unterdruck an der Saugseite, so dass weitere Flüssigkeit über die Strömungskanäle 41 in die Pumpe eingesaugt wird.

Zwischen dem Rotor 25 und dem Gehäuse 37 sind Spalte 49 ausgebildet, die von einem Teil der angesaugten Flüssigkeit durchströmt werden. Die Flüssigkeit umströmt den Rotor 25 mit der sich in axialer Richtung am äußeren Umfang des Rotors 25 erstreckenden Magnethalterung 27. Durch einen Spalt zwischen dem Rotor 25 und dem Spalttopf 39 strömt die Flüssigkeit in Richtung der Rotorachse 51. In der Rotorachse 51 ist eine zentrale Bohrung 53 ausgebildet, durch die die Flüssigkeit zur Saugseite der Pumpe 23 zurückströmt.

Mit der Rotorachse 51 ist der Rotor 25 im Gehäuse 37 gelagert, wobei das Lager des Rotors 25 vorzugsweise aus einem Hartmetall, insbesondere aus Wolframcarbid, gefertigt ist.

Das Gehäuse 37 weist in der hier dargestellten Ausführungsform einen Hohlraum 55 auf, der von einem Temperiermedium durchströmt werden kann. Hierdurch lässt sich die Pumpe 23 temperieren, so dass zum Beispiel vermieden werden kann, dass durch Abkühlung der Flüssigkeit Teile der Flüssigkeit auskristallisieren und Feststoff bilden, was zu Betriebsstörungen in der Pumpe führen könnte.

Um eine unzulässige Temperaturänderung, zum Beispiel durch Trockenlauf oder eine Lagerschädigung feststellen zu können, ist es möglich, im Bereich des Spalttopfes 39 eine hier nicht dargestellte Temperaturmesssonde zu positionieren. Um Leckagen zu vermeiden ist es dabei bevorzugt, die Temperaturmesssonde an der Außenseite des Spalttopfes 39 anzubringen. Mit der Temperaturmesssonde wird somit die Temperatur an der Oberfläche des Spalttopfes 39 gemessen. Aufgrund der geringen Wandstärke, in der der Spalttopf 39 ausgeführt ist, werden Temperaturänderungen auch an der Oberfläche des Spalttopfes wahrgenommen, so dass auch mit dieser Anbringung eine ausreichend schnelle Reaktionszeit zur Vermeidung von Schädigungen an der Pumpe gewährleistet ist.

### Bezugszeichenliste

- 1: Kolonne
- 3: Zulauf
- 5: Kopfstrom
- 7: Kopfkondensator
- 9: Rücklauf
- 11: Abzug
- 13: Seitenabzug
- 15: Wärmetauscher
- 17: Sumpfstrom
- 19: Teilstrom
- 21: Verdampfer
- 23: Pumpe
- 25: Rotor
- 27: Magnethalterung
- 29: Magnet
- 31: Antriebsachse
- 32: Magnet
- 33: tellerförmige Erweiterung
- 35: Magnethalterung
- 37: Gehäuse
- 39: Spalttopf
- 41: Strömungskanal
- 43: Strömungskanal im Rotor 25
- 45: Ringraum
- 47: druckseitiger Ablauf
- 49: Spalt
- 51: Rotorachse
- 53: zentrale Bohrung
- 55: Hohlraum

## Patentansprüche

1. Verwendung einer Kolonne zur Reindestillation von Carbonsäureanhydriden, wobei die Kolonne einen Sumpfumlauf umfasst, in dem ein Verdampfer (21) aufgenommen ist, sowie eine Pumpe (23), um am Sumpf entnommenes Produkt durch den Verdampfer (21) und zurück in die Kolonne zu leiten, **dadurch gekennzeichnet, dass** die Pumpe (23) eine Magnetkupplungspumpe ist, bei der am äußeren Umfang des Rotors (25) eine sich in axialer Richtung erstreckende Magnethalterung (27) ausgebildet ist und der Rotor (25) auf der der Saugseite gegenüberliegenden Seite mit einem Spalttopf (39) verschlossen ist und dass zwischen der Magnethalterung (27) und dem Gehäuse (37) sowie zwischen der Magnethalterung (27) und dem Spalttopf (39) ein Spalt ausgebildet ist, der von der mit der Pumpe (23) zu fördernden Flüssigkeit durchströmt wird.

2. Verwendung gemäß Anspruch 1, **dadurch gekennzeichnet, dass** die Querschnittsflächen des Spalts zwischen der Magnethalterung (27) und dem Gehäuse (37) sowie des Spalts zwischen der Magnethalterung (27) und dem Spalttopf (39) kleiner ist als die Querschnittsfläche eines im Rotor (25) radial verlaufenden Strömungskanals (43).

3. Verwendung gemäß Anspruch 1 oder 2, **dadurch gekennzeichnet, dass** die den Spalt zwischen Magnethalterung (27) und Gehäuse (37) und zwischen Magnethalterung (27) und Spalttopf (39) strömende Flüssigkeit durch eine zentrale Bohrung (53) in der Achse (51) des Rotors (25) zurück zur Saugseite der Pumpe (23) gefördert wird.

4. Verwendung gemäß einem der Ansprüche 1 bis 3, **dadurch gekennzeichnet, dass** das Lager des Rotors (25) aus Wolframcarbid gefertigt ist.

5. Verwendung gemäß einem der Ansprüche 1 bis 4, **dadurch gekennzeichnet, dass** der Spalttopf (39) eine Wandstärke im Bereich von 3 bis 5 mm aufweist.

6. Verwendung gemäß einem der Ansprüche 1 bis 5, **dadurch gekennzeichnet, dass** der Spalttopf (39) aus einer Nickelbasislegierung gefertigt ist.

7. Verwendung gemäß einem der Ansprüche 1 bis 6, **dadurch gekennzeichnet, dass** das Pumpengehäuse (37) beheizbar ist.

8. Verwendung gemäß Anspruch 7, **dadurch gekennzeichnet, dass** das Pumpengehäuse (37) zur Beheizung einen Hohlraum (55) aufweist, der von einem Temperiermedium durchströmt wird.

9. Verwendung gemäß einem der Ansprüche 1 bis 8, **dadurch gekennzeichnet, dass** am Spalttopf (39)eine Temperaturmesssonde positioniert ist.

10. Verwendung gemäß einem der Ansprüche 1 bis 9, **dadurch gekennzeichnet, dass** das Carbonsäureanhydrid Phthalsäureanhydrid ist.

## Claims

1. The use of a column for purification by distillation of carboxylic acid anhydrides, wherein the column comprises a bottoms circuit in which an evaporator (21) is accommodated, and a pump (23) for conducting product removed at the bottom through the evaporator (21) and back into the column, wherein the pump (23) is a magnetic coupling pump in which a magnet holder (27) extending in the axial direction is formed on the outer circumference of the rotor (25) and the rotor (25) is closed off by a containment can (39) on the side opposite the suction side, and wherein a gap through which the liquid to be conveyed by the pump (23) flows is formed between the magnet holder (27) and the housing (37) and between the magnet holder (27) and the containment can (39).

2. The use according to claim 1, wherein the cross-sectional areas of the gap between the magnet holder (27) and the housing (37) and of the gap between the magnet holder (27) and the containment can (39) are less than the cross-sectional area of a flow duct (43) extending radially in the rotor (25).

3. The use according to claim 1 or 2, wherein the liquid flowing through the gap between the magnet holder (27) and the housing (37) and between the magnet holder (27) and the containment can (39) is conveyed through a central bore (53) in the shaft (51) of the rotor (25) back to the suction side of the pump (23) .

4. The use according to one of claims 1 to 3, wherein the bearing of the rotor (25) is manufactured from tungsten carbide.

5. The use according to one of claims 1 to 4, wherein the containment can (39) has a wall thickness in the range from 3 to 5 mm.

6. The use according to one of claims 1 to 5, wherein the containment can (39) is manufactured from a nickel-based alloy.

7. The use according to one of claims 1 to 6, wherein the pump housing (37) is heatable.

8. The use according to claim 7, wherein the pump housing (37) has a cavity (55) through which a heating medium flows for the purpose of heating.

9. The use according to one of claims 1 to 8, wherein a temperature measurement probe is positioned on the containment can (39).

10. The use according to one of claims 1 to 9, wherein the carboxylic acid anhydride is phthalic acid anhydride.

## Revendications

1. Utilisation d'une colonne pour la distillation pure d'anhydrides d'acides carboxyliques, la colonne comprenant une circulation de fond, dans laquelle est incorporée un évaporateur (21) ainsi qu'une pompe (23), pour guider le produit prélevé dans le fond à travers l'évaporateur (21) et en retour dans la colonne, **caractérisée en ce que** la pompe (23) est une pompe à accouplement magnétique, dans laquelle un support magnétique (27) s'étendant dans la direction axiale est réalisé au niveau de la périphérie externe du rotor (25) et le rotor (25) est fermé par un pot d'entrefer (39) sur le côté opposé au côté aspiration et **en ce qu'**une fente est réalisée entre le support magnétique (27) et le carter (37) ainsi qu'entre le support magnétique (27) et le pot d'entrefer (39), qui est traversée par le liquide à transporter par la pompe (23).

2. Utilisation selon la revendication 1, **caractérisée en ce que** les surfaces de section transversale de la fente entre le support magnétique (27) et le carter (37) ainsi que de la fente entre le support magnétique (27) et le pot d'entrefer (39) sont plus petites que la surface de section transversale d'un canal d'écoulement (43) s'étendant radialement dans le rotor (25).

3. Utilisation selon la revendication 1 ou 2, **caractérisée en ce que** le liquide qui s'écoule dans la fente entre le support magnétique (27) et le carter (37) et entre le support magnétique (27) et le pot d'entrefer (39) est transporté à travers un trou central (53) dans l'axe (51) du rotor (25) en retour vers le côté aspiration de la pompe (23).

4. Utilisation selon l'une quelconque des revendications 1 à 3, **caractérisée en ce que** le palier du rotor (25) est réalisé en carbure de tungstène.

5. Utilisation selon l'une quelconque des revendications 1 à 4, **caractérisée en ce que** le pot d'entrefer (39) présente une épaisseur de paroi dans la plage de 3 à 5 µm.

6. Utilisation selon l'une quelconque des revendications 1 à 5, **caractérisée en ce que** le pot d'entrefer (39) est réalisé en un alliage à base de nickel.

7. Utilisation selon l'une quelconque des revendications 1 à 6, **caractérisée en ce que** le carter (37) de pompe peut être chauffé.

8. Utilisation selon la revendication 7, **caractérisée en ce que** le carter (37) de pompe présente, pour le chauffage, un espace creux (55) qui est traversé par un flux de milieu caloporteur.

9. Utilisation selon l'une quelconque des revendications 1 à 8, **caractérisée en ce qu'**une sonde de mesure de la température est positionnée au niveau du pot d'entrefer (39) .

10. Utilisation selon l'une quelconque des revendications 1 à 9, **caractérisée en ce que** l'anhydride d'acide carboxylique est l'anhydride de l'acide phtalique.
